# EUROPÄISCHE PATENTSCHRIFT

(11) **EP 2 307 291 B1**
(45) Veröffentlichungstag und Bekanntmachung des Hinweises auf die Patenterteilung: **05.09.2012**
(21) Anmeldenummer: 09772418.1
(22) Anmeldetag: 30.06.2009
(51) Int. Cl.: B65G 1/14, A01D 85/00

(54) **VERFAHREN ZUM STAPELN VON BALLENFÖRMIGEN BEHÄLTNISSEN UND ANORDNUNG VON BALLENFÖRMIGEN BEHÄLTNISSEN**
METHOD FOR STACKING BALE-SHAPED CONTAINERS AND ARRANGEMENT OF BALE-SHAPED OBJETCS
PROCÉDÉ POUR EMPILER DES CONTENANTS EN FORME DE BALLE ET ARRANGEMENT DES CONTENANTS EN FORME DE BALLE

(30) Priorität: 30.06.2008 AT 10372008
(43) Veröffentlichungstag der Anmeldung: 13.04.2011
(73) Patentinhaber: UV&P Umweltmanagement-Verfahrenstechnik Neubacher & Partner GESMBH, 1020 Wien (AT)
(72) Erfinder: NEUBACHER, Franz, A-2000 Stockerau (AT); DANZINGER, Georg, A-1020 Wien (AT); GRESSLEHNER, Gerhard, A-4060 Leonding (AT); WIMMER, Johann, A-4563 Micheldorf (AT)
(74) Vertreter: Babeluk, Michael
(86) Internationale Anmeldenummer: PCT/EP2009/058150
(87) Internationale Veröffentlichungsnummer: WO 2010/000718

(56) Entgegenhaltungen:
- EP-A- 1 757 538
- WO-A-98/26648
- FR-A- 2 669 904
- GB-A- 2 348 633
- JP-A- 5 201 542
- US-A- 3 476 260
- US-A- 3 747 780
- US-A- 4 488 649
- US-A- 4 891 930

## Beschreibung

Die Erfindung betrifft ein Verfahren zum Stapeln von ballenförmigen Behältnissen in mindestens zwei übereinander geschichteten Lagen, wobei die unterste Lage eine im Wesentlichen polygonale Fläche bedeckt.

Abfallbeseitigung besteht gegenwärtig weltweit - insbesondere in den sogenannten Reformstaaten, in Schwellenländern und Entwicklungsländern - am häufigsten in der Ablagerung der Abfälle auf ungeordneten Deponien, mit erheblichen Konsequenzen wie Umweltverschmutzung und Vergeudung von Ressourcen, die potentiell einer ökologischen und ökonomisch sinnvollen Abfallverwertung zugänglich wären. Fallweise oder ständig auftretende Deponiebrände verursachen enorme Schadstoffemissionen mit hohem Potential der Schädigung der menschlichen Gesundheit und der Umwelt, wobei diffuse Schadstoffemissionen flüchtiger Verbindungen und Schadstoffverfrachtungen von Abfalllagerungen auch ohne Verbrennungsvorgänge in praktisch allen Umweltmedien (Luft, Wasser, Boden, aber auch in Fauna und Flora) auftreten können.

Eine zukunftsweisende Abfallbewirtschaftung erfordert ein stoffspezifisches Management bezogen auf unterschiedliche Materialgruppen einschließlich der notwendigen Zwischenlagerung von Abfällen zwecks Überbrückung des Zeitraums bis zur Inbetriebnahme neuer Anlagen oder zwecks Überbrückung temporärer Engpässe an verfügbaren Behandlungsanlagenkapazitäten.

Es ist bekannt, heizwertreiche Abfälle in verdichteter Form, nämlich in Form von folienumwickelten Ballen, zu lagern. Es wird dabei eine ähnliche Technologie wie in der Landwirtschaft benutzt, in der Futtermittel in Form von folienumwickelten Ballen, sogenannten Silage-Ballen, gelagert werden.

Generell haben diese Ballen in der Regel eine im Wesentlichen zylindrische Form mit abgerundeten Kanten, wobei die Höhe des Zylinders etwa dem Durchmesser entspricht. Da die Lagerfläche in der Regel knapp und wertvoll ist, werden die ballenförmigen Körper zumeist in mehreren Lagen übereinander gestapelt, wodurch sich pyramidenförmige oder pyramidenstumpfförmige Strukturen ergeben.

Auf diese Weise ist es möglich, die Gefahr von Abfall- bzw. Deponiebränden weitestgehend zu verhindert und eine vergleichsweise umweltverträgliche geordnete Deponie bzw. geordnetes Zwischenlager zu schaffen.

Problematisch ist jedoch, dass bei einer bestimmten Größe und vor allem Höhe (mehr als vier Meter) der Struktur die mechanische Stabilität kritisch wird. Grundsätzlich ist zwar das Gebilde aus übereinandergestapelten Ballen in sich stabil, im Fall von Unfällen kann es jedoch dazu kommen, dass die Struktur zumindest teilweise zusammenbricht, so dass tonnenschwere Ballen aus relativ großer Höhe herabstürzen und große Schäden an Material und Menschen verursachen können. Im Sinne der Erhöhnung der Betriebssicherheit ist es daher wünschenswert, ein Verfahren zu schaffen, mit dem die Stabilität der Strukturen erhöht werden kann, so dass Betriebssicherheit auch im Fall von unvermeidbaren Unfällen gewährleistet werden kann. Eine weitere Aufgabe der Erfindung ist es, eine Anordnung von ballenförmigen Körpern und Sperrkörper für die Herstellung einer solchen Anordnung anzugeben, mit denen die Sicherheit erhöht werden kann.

Ein weiteres Problem mit bestehenden Lagern für brennbare Abfälle besteht darin, dass sehr hohe Anforderungen an den Brandschutz gegeben sind. Dies betrifft sowohl Brände, die durch Fremdzündung, d.h. von außen, entstehen, als auch solche die durch Selbstentzündung, d.h. von innen, verursacht werden. Für die Fremdzündung ist es notwendig, die Gefahr einer Beschädigung der Ballen bzw. des Stapels insgesamt soweit als möglich zu verringern.

Die Gefahr der Selbstentzündung kann insbesondere durch die Vermeidung der Entstehung von Schwelgasen erreicht werden. Eine jedenfalls erforderliche Maßnahme ist es, die freie Zugänglichkeit von brennbaren Stoffen soweit als möglich zu verhindern.

Aus der KR 2002-0015195 A, der JP 62-016930 A und der US 4,295,772 A sind verschiedene Lösungen bekannt, die jedoch nicht die obigen Anforderungen erfüllen können. Ähnliche Maßnahmen können auch der EP 1 757 538 A, die die Oberbegriff der Ansprüche 1 und 6 offenbart, der US 4,488,649 A, der JP 05-201542 A, der US 3,476,260 A, der US 3,747,780 A oder FR 2 669 904 A entnommen werden.

Eine Aufgabe der Erfindung ist es dementsprechend den obigen Anforderungen an den Brandschutz Rechnung zu tragen.

Erfindungsgemäß werden diese Aufgaben durch ein Verfahren gelöst, gemäβ Anspruch 1, bei dem an mindestens einer Ecke der untersten Lage ein Sperrkörper aus einem festen Material angeordnet wird und dass ein UV-Schutz aufgebracht wird.

Es hat sich herausgestellt, dass der kritischste Teil der pyramidenförmigen Struktur die Ballen in den Ecken der untersten Lage sind. Wenn einer solcher Ballen beispielsweise durch ein Transportfahrzeug beschädigt oder verrückt wird, kann es zu einer Destabilisierung der gesamten Struktur mit dem entsprechenden Gefährdungspotential kommen. Es hat sich herausgestellt, dass es durch das Vorsehen spezieller Sperrkörper an den exponierten unteren Ecken des Stapels auch bei zu erwartenden Unfällen wesentlich zu verringern.

Ein wesentlicher Aspekt der vorliegenden Erfindung ist des Weiteren, die Brandsicherheit durch einen Schutz der Ballen vor UV-Strahlen wesentlich zu erhöhen. Dies kann grundsätzlich auf mehrere Arten erfolgen. Eine grundlegende Erkenntnis besteht darin, dass die verwendeten Folien eine gewissen Zeit lang einen durchaus ausreichenden Schutz vor UV-Strahlen ergeben. Durch eine entsprechende Alterung ist ein solcher Schutz jedoch in weiterer Folge nicht mehr gegeben. Gleichzeitig soll jedoch die Lagerdauer nicht durch die Dauerhaftigkeit des UV-Schutzes beschränkt sein. Eine Lösung dieses Problems besteht nun darin, dass die erste Lage vollflächig aufgebracht wird und in der oben beschriebenen Weise an den Ecken Sperrkörper angeordnet werden. Die zweite Lage wird nun nicht an allen Seiten bis zum Rand der ersten Lage hin verlegt, sondern es werden an einer oder mehreren Seiten rückspringend Lagerplätze freigelassen. Von der zweiten Lage an werden die weiteren Lagen - wie oben beschrieben - pyramidenstumpfförmig aufgeschichtet. Die freiliegenden Ballen der ersten Lage werden durch eine entsprechende Plane abgedeckt. Während der ersten Lagerperiode, die beispielsweise ein bis zwei Jahre dauert, werden nun die außenseitigen Ballen der zweiten, dritten und jeder weiteren Lage dem Sonnenlicht und damit der UV-Strahlung ausgesetzt. Sobald erkannt wird, dass die UV-Sicherheit der Folien aus denen die Ballen aufgebaut sind, nicht mehr in erforderlichem Umfang gegeben ist, werden nun neue Ballen beginnend mit den freigebliebenen Plätzen der zweiten Lage in Form einer Außenschicht auf die Anordnung aufgebracht. Die bisher gegenüber der UV-Strahlung exponierten Flächen werden auf diese Weise durch die neuen Ballen abgedeckt. So kann durch eine weitere Lagerperiode von ein bis zwei Jahren eine Gesamtlagerdauer von drei oder mehr Jahren erreicht werden, ohne die UV-Beständigkeit des Stapels zu beeinträchtigen.

Eine weitere Möglichkeit zur Verbesserung der UV-Beständigkeit kann durch Abdecken der einzelnen Ballen erreicht werden, wobei ein entsprechendes Medium auf die Ballen aufgebracht bzw. aufgesprüht wird. Dabei kann es sich beispielsweise um Quarzsand, gemahlenem Kalkstein oder Dolomit aber auch um Kalkmilch, gegebenenfalls unter Zusatz von gemahlenem Gesteinsmehl, handeln. Wesentlich ist, dass das entsprechende Medium nicht brennbar ist und keine Umweltbedenken bestehen. Das aufzubringende Material kann zur Verbesserung des Orts- und Landschaftsbildes entsprechen eingefärbt werden (z.B. olivgrün, ockerbraun) oder mit faserartigem Zusatzmaterial zwecks Verbesserung von Festigkeits- oder Brandschutzeigenschaften versetzt werden.

Eine besonders begünstigte Ausführungsvariante des erfindungsgemäßen Verfahrens sieht vor, dass die unterste Lage rechteckig ausgelegt wird und dass an allen vier Ecken ein Sperrkörper angeordnet wird. Auf diese Weise wird einerseits der verfügbare Platz bestmöglich ausgenutzt und andererseits kann eine besonders stabile Struktur erreicht werden.

Besonders vorteilhaft ist es, wenn auf jeweils vier Ballen einer Lage mittig ein Ballen einer weiteren Lage gelegt wird. Auf diese Weise wird eine im Wesentlichen pyramidenförmige Struktur hergestellt, die sich als besonders stabil herausgestellt hat.

Die Erfindung betrifft weiters eine Anordnung von ballenförmigen Behältnissen gemäβ Anspruch 6. Wie bereits oben ausgeführt, dienen die Sperrkörper an den unteren Ecken dazu, den Stapel zu stabilisieren, und zwar nicht nur im Gleichgewichtszustand, sondern auch im Fall von Unfällen.

Wie bereits oben beschrieben, ist es in besonders bevorzugter Weise möglich, den UV-Schutz durch eine Abdeckung mit Sand zu verwirklichen. Bevorzugt wird Quarzsand oder gemahlener Kalkstein oder Dolomit eingesetzt werden, der auch bei der Verbrennung im Wirbelschichtofen bzw. zur Einbindung von sauren Gasen wie Schwefeloxide und Halogenwasserstoffe benötigt wird. Eine Alternative bzw. zusätzlich zu Sand kann Kalkmilch eingesetzt werden, die auf die Ballen aufgesprüht wird. Neben einer erheblichen Verringerung der UV-Belastung wird durch die Auflagen auch eine Erhöhung der Brandsicherheit erzielt, was unter anderem darauf zurückzuführen ist, dass Spalten im Stapel größtenteils verschlossen werden. Bei der Verbrennung der mit Kalkmilch behandelten Ballen können entsprechende Einsparungen an den Chemikalien erzielt werden, die dort zur Verringerung der Schwefel- und Chloridbelastung zugegeben werden müssen.

Auf diese Weise kann ein Positionierungs-System verwirklicht werden, durch das ausgehend von einem bestimmten Sperrkörper jedem Ballen eindeutige Koordinaten zugeordnet werden, die sich auf die Lage, die Reihe und die Position innerhalb der Reihe beziehen. Auf diese Weise ist ein vollständig transparentes Stoffstrommanagement verwirklichbar und es ist eine exakte Lagerbuchhaltung möglich. Damit können gesetzliche Vorgaben wie etwa in Zusammenhang mit einer befristeten Lagerung eingehalten und nachgewiesen werden.

Besonders günstig ist es in diesem Zusammenhang, wenn der Sperrkörper im Wesentlichen die gleichen Abmessungen aufweist, wie die einzelnen Behältnisse. Auf diese Weise bleibt die Form der Gesamtstruktur im Wesentlichen erhalten, das heißt, dass die Sperrkörper ähnlich wie Ballen gesetzt und verwendet werden können.

Eine besonders begünstigte Form der erfindungsgemäßen Anordnung sieht vor, dass die Ballen in Abhängigkeit von ihrem Inhalt farblich gekennzeichnet sind. Dies erfolgt beispielsweise durch Verwendung unterschiedlich eingefärbter Folien in Abhängigkeit von der jeweiligen Materialgruppe, zu der der Inhalt des Ballens zuzuordnen ist. Längerfristig kann eine Normung der Farbenzuordnung erfolgen (werksintern oder generell im EU Binnenmarkt).

Dadurch ist es möglich, beispielsweise unterschiedlich zu entsorgende Materialien in einfacher Weise getrennt zu verwalten, ohne besondere logistische Maßnahmen treffen zu müssen. Die Materialien können gemeinsam in einem chaotischen System gelagert werden und dennoch jederzeit getrennt voneinander einer spezifischen Weiterverarbeitung zugeführt werden.

Weiters betrifft die vorliegende Erfindung einen Sperrkörper zur Herstellung einer Anordnung, wie sie oben beschrieben worden ist. Der Sperrkörper ist als Formkörper aus einem festen Material ausgebildet und besitzt mindestens eine ebene Auflagefläche. Dabei muss die Auflagefläche keineswegs durchgängig eben ausgebildet sein. Sie kann auch aus mehreren ebenen Abschnitten zusammengesetzt sein. Um eine ungestörte Auflagerung von Behältnissen zu ermöglichen, ist es von besonderem Vorteil, wenn der obere Teil im Wesentlichen ballenförmig ausgebildet ist.

Die Manipulation mit fahrbaren Arbeitsgeräten kann dadurch sicherer gestaltet werden, dass eine Kante des Sperrkörpers mit einer Leiteinrichtung versehen ist. Dabei kann es sich um eine Leitschiene oder dergleichen handeln. Die Sicherheit kann weiter dadurch erhöht werden, dass an mindestens einem Abschnitt der Seitenwand Reflektoren und/oder Warnleuchten vorgesehen sind, so dass auch bei schlechten Sichtverhältnissen die Wahrnehmung entsprechend erleichtert wird. Zusätzlich oder alternativ kann an der Oberseite des Sperrkörpers ein Mast angebracht sein, der zur Anbringung von Bewegungsmeldern, Brandfrüherkennungssystemen und Beleuchtungseinrichtungen für das Betriebsgelände dient. Dieser Mast kann in Metall ausgeführt werden und weiters als wesentlicher Teil eines Blitzableitersystems ausgebildet werden (Vermeidung einer Entzündung des Ballenlagers durch Blitzschlag).

In einer besonders bevorzugten Ausführungsvariante der Erfindung ist der Sperrkörper im Wesentlichen einstückig aus Beton hergestellt. Alternativ ist es jedoch auch möglich, den Sperrkörper mit einer Außenhülle aus Kunststoff auszubilden, die mit einem schweren Füllmaterial, wie etwa Beton oder mit einem Schotter-Wassergemisch gefüllt ist.

Eine Erhöhung der Stabilität kann dadurch erreicht werden, dass eine Seitenfläche des Sperrkörpers mit einer konkaven Aufnahmefläche für einen Ballen versehen ist. Dadurch übernimmt der Sperrkörper zu seinem Eigengewicht auch noch das Gewicht des an der Aufnahmefläche anliegenden Ballens, sowie der darüber gestapelten Ballen in anteiliger Form. Auf diese Weise kann die Stabilität zusätzlich erhöht werden.

Die Form des Sperrkörpers kann dadurch optimiert werden, dass ein unterer Abschnitt aus einer ebenen Begrenzungsfläche, einer weiteren Begrenzungsfläche und einer abgerundeten Begrenzungsfläche besteht und dass an den unteren Abschnitt ein kuppelförmig-zylindrischer oberer Abschnitt anschließt. Auf diese Weise fügt sich der Sperrkörper optimal in den Stapel der ballenförmigen Behältnisse ein.

In der Folge wird die Erfindung anhand der in den Figuren dargestellten Ausführungsbeispiele näher erläutert. Es zeigen:
- Fig. 1: eine axonometrische Ansicht einer erfindungsgemäßen Anordnung;
- Fig. 2: ein Detail von Fig. 1 in seitlicher Ansicht;
- Fig. 3: eine Draufsicht auf das Detail von Fig. 2; und
- Fig. 4: eine schematische Darstellung zur Erklärung der Schichtung im Längsschnitt.

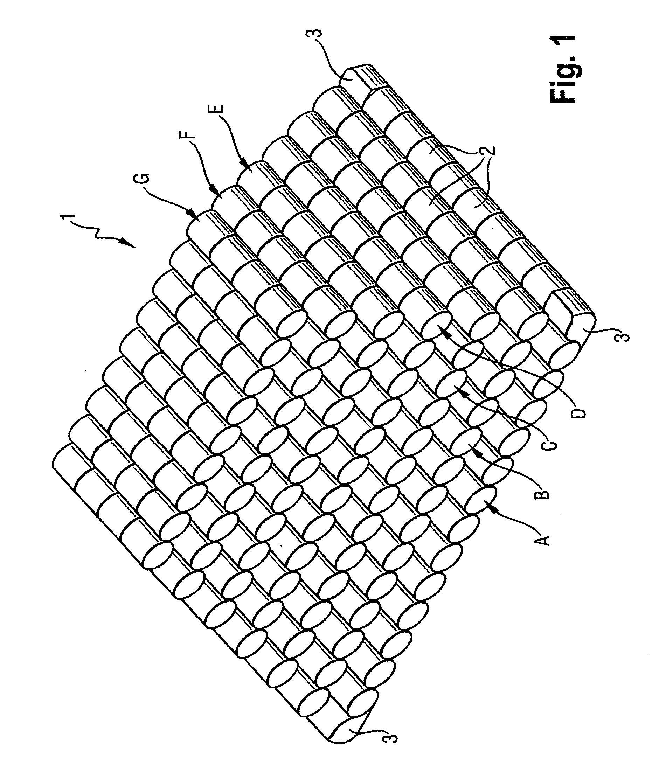

Fig. 1 zeigt eine Anordnung, die insgesamt mit 1 bezeichnet ist und aus übereinander gestapelten Ballen 2 besteht. Die im Wesentlichen zylindrisch ausgebildeten Ballen 2 sind in mehreren Lagen angeordnet, von denen die unterste Lage mit A und die darüber gestapelten Lagen mit B, C, D, E, F und G bezeichnet sind. An den vier Ecken der rechteckigen untersten Lage A ist jeweils ein Sperrkörper 3 zur Stabilisierung der Anordnung 1 angeordnet.

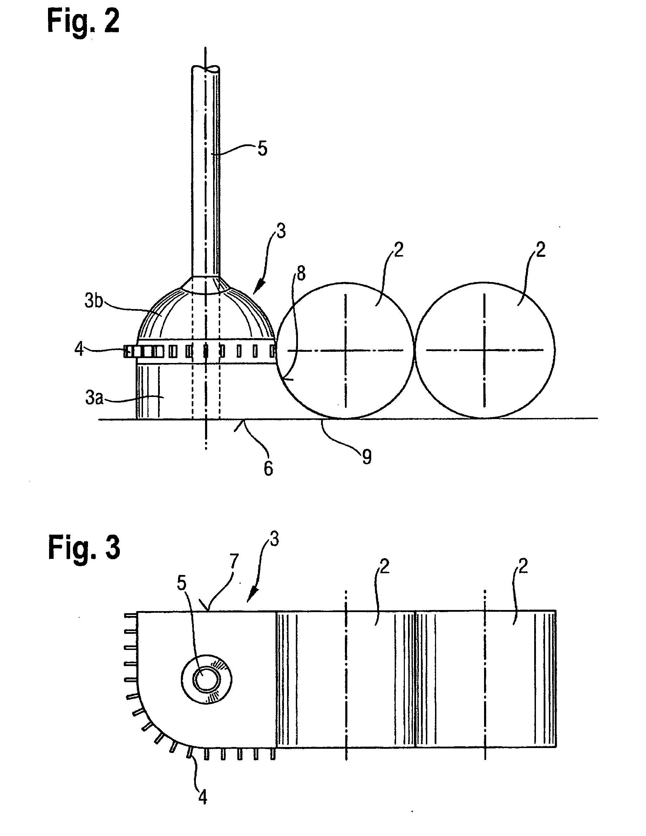

Fig. 2 und Fig. 3 zeigen den Bereich eines Sperrkörpers 3 in vergrößerter Ansicht im Detail. Der Sperrkörper 3 ist als Formkörper aus Beton ausgebildet und besteht aus einem unteren Abschnitt 3a und einem oberen Abschnitt 3b. Im mittleren Bereich sind Reflektoren 4 angeordnet, um die Sichtbarkeit entsprechend zu verbessern. An der höchsten Stelle des oberen Abschnitts 3b ist ein Mast 5 angeordnet, der Beleuchtungskörper, Bewegungsmelder und/oder Brandmelder tragen kann, die hier nicht dargestellt sind.

Der untere Abschnitt 3a weist an seiner Unterseite eine ebene Auflagefläche 6 auf, auf der der Sperrkörper 3 am Boden aufliegt. Weiters weist der untere Abschnitt 3a eine ebene Begrenzungsfläche 7 und eine Unterkante 9 auf, an die eine konkave Aufnahmefläche 8 für einen Ballen 2 anschließt. Der obere Abschnitt 3b besitzt im Wesentlichen eine Form wie der Oberteil eines Ballens 2.

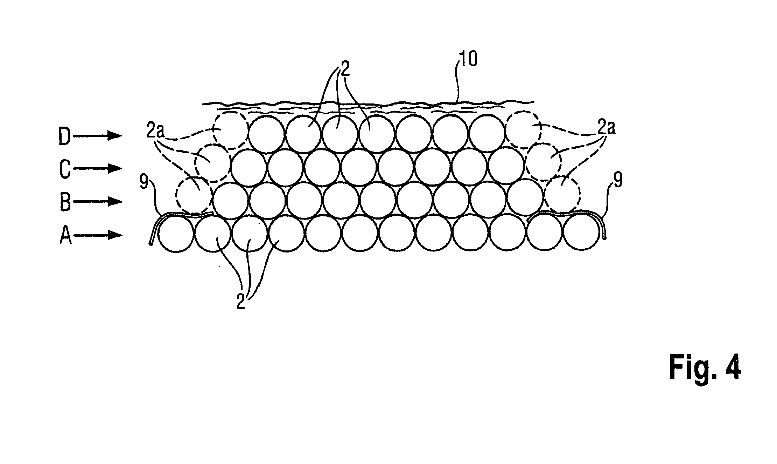

Fig. 4 zeigt schematisch eine erfindungsgemäße Anordnung im Schnitt. Dabei sind die Ballen 2, die bereits in der ersten Lagerperiode aufgestapelt werden, mit durchgezogenen Linien bezeichnet, während die weiteren Ballen 2a, die erst für die zweite Lagerperiode angebracht werden, mit unterbrochenen Linien dargestellt sind. Die Ballen der untersten Lage A auf die die weiteren Ballen 2a aufgestapelt werden, sind dabei zur Erhöhung der Lebensdauer mit einer Folie 9 abgedeckt, da diese randständigen Ballen über die gesamte Dauer der Lagerung der UV-Strahlung ausgesetzt sind. Oberhalb der obersten Lage D wird eine Abdeckung, beispielsweise aus einer Sandschüttung 10, vorgesehen, die auf diese Weise den entsprechenden Schutz bietet.

Die vorliegende Erfindung ermöglicht es, die Sicherheit bei der Lagerung von Abfällen und ähnlichen Gütern wesentlich zu erhöhen.

## Patentansprüche

1. Verfahren zum Stapeln von ballenförmigen Behältnissen bzw. Ballen (2) in mindestens zwei übereinander geschichteten Lagen (A, B, C, D, E, F, G), wobei die unterste Lage (A) eine im wesentlichen polygonale Fläche bedeckt, **dadurch gekennzeichnet, dass** an mindestens einer Ecke der untersten Lage (A) ein Sperrkörper (3) aus festem Material angeordnet wird, und dass ein UV-Schutz aufgebracht wird.

2. Verfahren nach Anspruch 1, **dadurch gekennzeichnet, dass** die unterste Lage (A) rechteckig ausgelegt wird und dass an allen vier Ecken ein Sperrkörper (3) angeordnet wird.

3. Verfahren nach Anspruch 1 oder 2, **dadurch gekennzeichnet, dass** auf jeweils vier Behältnisse einer Lage (A, B, C, D, E, F, G) ein Behältnis einer weiteren Lage (A, B, C, D, E, F, G) gelegt wird.

4. Verfahren nach einem der Ansprüche 1 bis 3, **dadurch gekennzeichnet, dass** während einer ersten Lagerperiode an zumindest einer Außenseite von zumindest einer Lage Stapelplätze für Ballen freigelassen werden und dass der UV-Schutz darin besteht, dass in einer zweiten Lagerperiode an der mindestens einen Seite zusätzliche Ballen aufgebracht werden.

5. Verfahren nach einem der Ansprüche 1 bis 4, **dadurch gekennzeichnet, dass** der UV-Schutz durch Aufsprühen eines Abdeckmaterials auf die Ballen herbeigeführt wird.

6. Anordnung von ballenförmigen Behältnissen, bestehend aus einer untersten Lage (A), die eine im wesentlichen polygonale Fläche bedeckt und mindestens einer weiteren Lage (B, C, D, E, F, G) von Ballen (2), **dadurch gekennzeichnet, dass** an mindestens einer Ecke der untersten Lage (A) ein Sperrkörper (3) aus festem Material angeordnet ist, und die Ballen mit einem UV-Schutz versehen sind.

7. Anordnung nach Anspruch 6, **dadurch gekennzeichnet, dass** als UV-Schutz Sand auf die Ballen aufgetragen ist.

8. Anordnung nach Anspruch 6 oder 7, **dadurch gekennzeichnet, dass** als Abdeckmaterial Kalkmilch auf die Ballen aufgetragen ist.

9. Anordnung nach einem der Ansprüche 6 bis 8, **dadurch gekennzeichnet, dass** die Ballen der zweiten und gegebenenfalls weiterer Lagen rückspringend gegenüber den Ballen der ersten Lage angeordnet sind.

10. Anordnung nach Anspruch 9, **dadurch gekennzeichnet, dass** die Ballen der ersten Lage durch eine Plane abgedeckt sind.

11. Anordnung nach Anspruch 10, **dadurch gekennzeichnet, dass** die Plane eingefärbt ist.

12. Anordnung nach einem der Ansprüche 6 bis 11, **dadurch gekennzeichnet, dass** die unterste Lage (A) rechteckig ausgebildet ist und dass an allen vier Ecken der untersten Lage (A) ein Sperrkörper (3) angeordnet ist.

13. Anordnung nach einem der Ansprüche 6 bis 12, **dadurch gekennzeichnet, dass** auf jeweils vier Ballen (2) einer unteren Lage (A) mittig ein Behältnis einer oberen (B, C, D, E, F, G) Lage abgestützt ist.

14. Anordnung nach einem der Ansprüche 6 bis 13, **dadurch gekennzeichnet, dass** der Sperrkörper (3) im Wesentlichen die gleichen Abmessungen aufweist wie die einzelnen Behältnisse.

15. Anordnung nach einem der Ansprüche 6 bis 14, **dadurch gekennzeichnet, dass** die einzelnen Behältnisse als Ballen (2) ausgebildet sind, die aus stückigem Material bestehen, das durch eine Hülle aus einer mehrlagig angebrachten Kunststofffolie, gegebenenfalls auf eine darunter angebrachte Netzumwicklung, zusammengehalten ist.

16. Anordnung nach einem der Ansprüche 6 bis 15, **dadurch gekennzeichnet, dass** die Ballen (2) in Abhängigkeit von ihrem Inhalt farblich gekennzeichnet sind.

17. Anordnung nach einem der Ansprüche 6 bis 16, **dadurch gekennzeichnet, dass** ein Blitzableitungssystem vorgesehen ist.

## Claims

1. Method for stacking bag-type containers or bales (2) in at least two superimposed layers (A, B, C, D, E, F, G), where the bottom layer (A) covers an essentially polygonal area, **characterised in that** a blocking body (3) made of solid material is provided on at least one corner of the bottom layer (A) and that UV-protection is provided.

2. Method according to claim 1, **characterised in that** the bottom layer (A) is rectangular and that blocking bodies (3) are provided on all four corners.

3. Method according to claim 1 or 2, **characterised in that** on every four containers of one layer (A, B, C, D, E, F, G) one container of a further layer (A, B, C, D, E, F, G) is placed.

4. Method according to any of claims 1 to 3, **characterised in that** during a first period of storage stacking spaces for bales are left vacant on at least one outer side of at least one layer and that UV protection is provided by placing additional bales on said one side during a second period of storage.

5. Method according to any of claims 1 to 4, **characterised in that** UV protection is provided by spraying a covering material onto the bales.

6. Arrangement of bag-type containers, consisting of a bottom layer (A) covering an essentially polygonal area and at least one further layer (B, C, D, E, F, G) of bales (2), **characterised in that** a blocking body (3) of solid material is disposed on at least one corner of the bottom layer (A), and that the bales are provided with UV protection.

7. Arrangement according to claim 6, **characterised in that** for UV protection the bales are covered with sand.

8. Arrangement according to claim 6 or 7, **characterised in that** lime slurry is applied on the bales as protecting material.

9. Arrangement according to any of claims 6 to 8, **characterised in that** the bales of the second or further layers are set back relative to the bales of the previous layer.

10. Arrangement according to claim 9, **characterised in that** the bales of the first layer are covered with tarpaulin.

11. Arrangement according to claim 10, **characterised in that** the tarpaulin is coloured.

12. Arrangement according to any of claims 6 to 11, **characterised in that** the bottom layer (A) is rectangular and that blocking bodies (3) are disposed on all four corners of the bottom layer (A).

13. Arrangement according to any of claims 6 to 12, **characterised in that** each bale of an upper layer (B, C, D, E, F, G) is centrally placed on four supporting bales (2) of a lower layer (A).

14. Arrangement according to any of claims 6 to 13, **characterised in that** the blocking body (3) has essentially the same dimensions as the individual bales.

15. Arrangement according to any of claims 6 to 14, **characterised in that** the individual containers are configured as bales (2) which consist of pieces of material held together by a hull of multilayer plastic sheeting, with possibly an envelopping net beneath the plastic hull.

16. Arrangement according to any of claims 6 to 15, **characterised in that** the bales (2) are coloured, the colour identifying their contents.

17. Arrangement according to any of claims 6 to 16, **characterised in that** protection against lightning is provided.

## Revendications

1. Procédé pour empiler des conteneurs en forme de balle ou des balles (2) dans au moins deux couches superposées (A, B, C, D, E, F, G),
- la couche inférieure (A) couvrant une surface pratiquement polygonale,
procédé **caractérisé en ce qu'**
à au moins un coin de la couche inférieure (A), on installe un organe de blocage (3) en un matériau solide et on applique une protection anti-UV.

2. Procédé selon la revendication 1,
**caractérisé en ce que**
la couche inférieure (A) est de forme rectangulaire et aux quatre coins, on installe un organe de blocage (3).

3. Procédé selon la revendication 1 ou 2,
**caractérisé en ce que**
sur chaque fois quatre conteneurs de la première couche (A, B, C, D, E, F, G), on place un conteneur d'une autre couche (A, B, C, D, E, F, G).

4. Procédé selon l'une des revendications 1 à 3,
**caractérisé en ce qu'**
- au cours d'une première période de stockage, au moins sur un côté extérieur d'au moins une couche, on laisse libres des emplacements d'empilage de balles, et
- la protection anti-UV consiste à installer dans une seconde période de stockage, des balles supplémentaires contre au moins un côté.

5. Procédé selon l'une des revendications 1 à 4,
**caractérisé en ce qu'**
on réalise la protection anti-UV en pulvérisant un matériau de recouvrement sur les balles.

6. Disposition de conteneurs en forme de balle composée d'une couche inférieure (A) couvrant une surface pratiquement polygonale et au moins une autre couche (B, C, D, E, F, G) de balles (2),
disposition **caractérisée en ce qu'**
- à au moins un coin de la couche inférieure (A), on a un organe de blocage (3) en un matériau solide et les balles sont munies d'une protection anti-UV.

7. Disposition selon la revendication 6,
**caractérisée en ce que**
on met du sable sur les balles comme protection anti-UV.

8. Disposition selon la revendication 6 ou 7,
**caractérisée en ce que**
on applique du lait de chaux sur les balles comme matériau de recouvrement.

9. Disposition selon l'une des revendications 6 à 8,
**caractérisée en ce que**
la seconde et le cas échéant d'autres couches sont en retrait par rapport aux balles de la première couche.

10. Disposition selon la revendication 9,
**caractérisée en ce que**
les balles de la première couche sont couvertes par une bâche.

11. Disposition selon la revendication 10,
**caractérisée en ce que**
la bâche est teintée.

12. Disposition selon l'une des revendications 6 à 11,
**caractérisée en ce que**
la couche inférieure (A) est de forme rectangulaire et aux quatre coins de la couche inférieure (A), il y a un organe de blocage (3).

13. Disposition selon l'une des revendications 6 à 12,
**caractérisée en ce que**
un conteneur d'une couche supérieure (B, C, D, E, F, G) s'appuie au milieu de chaque fois quatre balles (2) de la couche inférieure (A).

14. Disposition selon l'une des revendications 6 à 13,
**caractérisée en ce que**
l'organe de blocage (3) a pratiquement les mêmes dimensions que celles de chaque conteneur.

15. Disposition selon l'une des revendications 6 à 14,
**caractérisée en ce que**
les différents conteneurs sont des balles (2) en un matériau en forme de morceau maintenus réunis par une enveloppe constituée par un film de matière plastique à plusieurs couches, le cas échéant sur une enveloppe en forme de filet placée en dessous.

16. Disposition selon l'une des revendications 6 à 15,
**caractérisée en ce que**
les balles (2) sont **caractérisées par** des couleurs en fonction de leur contenu.

17. Disposition selon l'une des revendications 6 à 16,
**caractérisée par**
un système de paratonnerres.
